# EUROPÄISCHE PATENTSCHRIFT

(11) **EP 1 344 268 B1**
(45) Veröffentlichungstag und Bekanntmachung des Hinweises auf die Patenterteilung: **16.06.2004**
(21) Anmeldenummer: 01989393.2
(22) Anmeldetag: 10.12.2001
(51) Int. Cl.: H01M 8/02

(54) **NIEDERTEMPERATUR-BRENNSTOFFZELLE**
LOW-TEMPERATURE FUEL CELL
PILE A COMBUSTIBLE BASSE TEMPERATURE

(30) Priorität: 20.12.2000 DE 10063720
(43) Veröffentlichungstag der Anmeldung: 17.09.2003
(73) Patentinhaber: SIEMENS AKTIENGESELLSCHAFT, 80333 München (DE)
(72) Erfinder: HARTNACK, Herbert, 91056 Erlangen (DE); LERSCH, Josef, 91336 Heroldsbach (DE); MATTEJAT, Arno, 91088 Bubenreuth (DE); STRASSER, Karl, 91058 Erlangen (DE)
(86) Internationale Anmeldenummer: PCT/DE2001/004637
(87) Internationale Veröffentlichungsnummer: WO 2002/050935

(56) Entgegenhaltungen:
- EP-A- 0 412 655
- EP-A- 0 889 536
- DE-A- 19 649 456
- DE-C- 19 732 859
- US-A- 5 366 823
- US-A- 5 747 185
- US-A- 5 770 033
- PATENT ABSTRACTS OF JAPAN vol. 1997, no. 06, 30. Juni 1997 (1997-06-30) & JP 09 035745 A (HITACHI LTD), 7. Februar 1997 (1997-02-07)

## Beschreibung

Die Erfindung betrifft eine Niedertemperatur-Brennstoffzelle mit einer Elektrode und einer Verbundleiterplatte, die die Elektrode mit einer Elektrode einer benachbarten Niedertemperatur-Brennstoffzelle elektrisch verbindet.

In einer Brennstoffzelle wird durch die Zusammenführung von Wasserstoff (H₂) und Sauerstoff (O₂) in einer elektrochemischen Reaktion elektrische Energie und Wärme erzeugt. Hierfür wird der Brennstoffzelle Wasserstoff und Sauerstoff entweder in ihrer reinen Form oder als Brenngas mit einem Wasserstoffanteil und als Luft zugeführt. Die Art dieser Betriebsgase, die der Brennstoffzelle zugeführt werden, hängt wesentlich von der Betriebsumgebung ab, in der die Brennstoffzelle betrieben wird. Eine Brennstoffzelle einer Brennstoffzellenanlage, die beispielsweise in einem hermetisch verschlossenen Raum betrieben wird, wird üblicherweise mit reinem Sauerstoff und reinem Wasserstoff betrieben. Diese Betriebsgase reagieren während des Betriebs der Brennstoffzelle im wesentlichen rückstandsfrei zu Wasser (H₂O), so dass die Brennstoffzellenanlage so gut wie keine Abgase erzeugt.

In Abhängigkeit von ihrer Betriebstemperatur werden Brennstoffzellen in Nieder-, Mittel- und Hochtemperatur-Brennstoffzellen eingeteilt, die sich wiederum durch verschiedene technische Ausführungsformen voneinander unterscheiden. Unter einer Niedertemperaturbrennstoffzelle wird eine Brennstoffzelle verstanden, die in einem Temperaturbereich bis 200 °C betrieben wird.

Bei einem sich aus einer Vielzahl von planaren Brennstoffzellen zusammensetzenden Brennstoffzellenstapel liegen unter einer oberen Verbundleiterplatte, welche den Brennstoffzellenstapel abdeckt, wenigstens eine Elektrolyt-Elektroden-Einheit, eine weitere Verbundleiterplatte, eine weitere Elektrolyt-Elektroden-Einheit, eine weitere Verbundleiterplatte usw.. Die Elektrolyt-Elektroden-Einheit umfasst dabei zwei Elektroden - eine Anode und eine Kathode - und einen zwischen Anode und Kathode angeordneten und als Membran ausgeführten Elektrolyten. Dabei bildet jeweils eine zwischen zwei benachbarten Verbundleiterplatten liegende Elektrolyt-Elektroden-Einheit mit den beidseitig an ihr mittelbar oder unmittelbar anliegenden Verbundleiterplatten eine Brennstoffzelle. Eine Verbundleiterplatte dient unter anderem der elektrischen Verbindung einer Elektrode einer Brennstoffzelle mit der an der Verbundleiterplatte anliegenden Elektrode der benachbarten Brennstoffzelle, wobei die Elektroden nicht unmittelbar an der Verbundleiterplatte anliegen müssen sondern mit ihr beispielsweise über Kontakt- oder Schutzschichten elektrisch in Verbindung stehen.

Zwischen der Anode einer Brennstoffzelle und der der Anode benachbarten Verbundleiterplatte ist der Anodengasraum der Brennstoffzelle ausgebildet. Durch den Anodengasraum strömt während des Betriebs der Brennstoffzelle Wasserstoff (H₂) oder wasserstoffhaltiges Betriebsgas. Auf der anderen Seite der Verbundleiterplatte befindet sich der Kathodengasraum der benachbarten Brennstoffzelle, der zwischen der Verbundleiterplatte und der Kathode der benachbarten Brennstoffzelle ausgebildet ist. Durch den Kathodengasraum strömt während des Betriebs dieser Brennstoffzelle Sauerstoff oder sauerstoffhaltiges Betriebsgas. Insbesondere beim Betrieb mit reinem Sauerstoff und reinem Wasserstoff ist die Verbundleiterplatte extrem korrosiven Betriebsgasen ausgesetzt. Bei manchen Niedertemperatur-Brennstoffzellen, insbesondere bei Polymer-Elektrolyt-Membran-Brennstoffzellen (PEM-Brennstoffzellen), werden die Betriebsgase zusätzlich befeuchtet. Die Verbundleiterplatte ist somit nicht nur den Betriebsgasen, sondern zusätzlich auch noch Wasser ausgesetzt. Wasser und beispielsweise reiner Sauerstoff bilden bei der Betriebstemperatur von Niedertemperatur-Brennstoffzellen ein extrem aggressives Medium.

Aus der WO 00/59056 ist eine Brennstoffzelle mit einer Verbundleiterplatte aus einer Chrombasislegierung bekannt. Eine solche Verbundleiterplatte weist allerdings den Nachteil auf, dass sie relativ spröde ist. Sie ist daher schlecht verformbar und sehr schlecht verschweißbar und muss außerdem relativ dick ausgeführt werden, um eine nötige Stabilität zu erhalten.

Es ist daher die Aufgabe der vorliegenden Erfindung, eine Niedertemperatur-Brennstoffzelle mit einer Verbundleiterplatte anzugeben, die besonders korrosionsbeständig und gut mechanisch verarbeitbar ist.

Diese Aufgabe wird durch eine Niedertemperatur-Brennstoffzelle der eingangs genannten Art gelöst, bei der die Verbundleiterplatte 50 bis 65 Gew.-% Nickel, 12 bis 22 Gew.-% Chrom, 10 bis 18 Gew.-% Molybdän, 4 bis 10 Gew.-% Eisen und 0,5 bis 5 Gew.-% Wolfram umfasst.

Eine derartig zusammengesetzte Verbundleiterplatte ist gegen Sauerstoff auch in Verbindung mit Wasser und bei erhöhten Temperaturen sehr korrosionsbeständig. Außerdem ist eine solche Verbundleiterplatte einfach mechanisch verformbar. So lässt sie sich durch einfaches Verbiegen ohne Rissbildung in die gewünschte Form bringen und es können ihr beispielsweise mit dem Verfahren des Tiefziehens gewünschte Formen, Kanäle oder Abstandhalter eingeprägt werden. Außerdem ist eine Verbundleiterplatte aus den oben genannten Materialien mittels verschiedener Verfahren gut schweißbar und sie lässt sich mit Nachbarbauteilen auf einfache Weise gasdicht verbinden. Als weiterer Vorteil sei erwähnt, dass die Verbundleiterplatte gasdicht ist und in einer Wasserstoffumgebung nicht versprödet. Außerdem leitet sie besonders gut Strom und Wärme ab.

In vorteilhafter Ausgestaltung der Erfindung umfasst die Verbundleiterplatte zwei einen Hohlraum bildende Bleche, wobei die Verbundleiterplatte in zweckmäßiger Ausgestaltung lediglich im wesentlichen aus den den Hohlraum bildenden Blechen bestehen kann. Durch die obengenannte Materialwahl für die Verbundleiterplatte ist es nicht notwendig, die Verbundleiterplatte aus Stabilitätsgründen in einer kompakten Form herzustellen. Außerdem ist das Material der Verbundleiterplatte ausreichend hart und so elastisch, dass zwei einen Hohlraum bildende dünne Bleche der Verbundleiterplatte eine genügende Stabilität verleihen. Der Hohlraum kann hierbei mit Zu- und Ableitungskanälen derart gestaltet sein, dass er während des Betriebs der Brennstoffzelle als Kühlwasserraum dient, der von Kühlwasser oder auch von Heizwasser durchströmt wird. Dies ist insbesondere für Niedertemperatur-Brennstoffzellen von besonderem Vorteil, da bei solchen Brennstoffzellen Wärme in erheblichem Umfang aus der Brennstoffzelle abgeführt werden muss. Eine von Kühlwasser durchströmte Verbundleiterplatte aus zwei einen Hohlraum bildenden Blechen löst dieses Problem einfach und effektiv. Zudem weist die Verbundleiterplatte eine genügende Stabilität auf, um auch unter Druck stehendes Kühlwasser ohne Gefahr von Rissen oder Undichtigkeiten aufnehmen zu können.

Zweckmäßigerweise weisen die Bleche im Bereich des Hohlraums eine Dicke zwischen 0,08 mm und 0,3 mm auf. Durch die oben genannte besondere Materialwahl ist es möglich, die Bleche für die Verbundleiterplatte besonders dünn und trotzdem mit ausreichender Stabilität herzustellen. Die Elastizität und gleichzeitige Zugfestigkeit des Materials unterbindet außerdem ein Platzen des Hohlraums der Verbundleiterplatte bei einer Druckdifferenz zwischen innerem und äußerer Umgebung des Hohlraums von einigen bar. Durch die außerordentlich geringe Dicke der Bleche wird erreicht, dass ein besonders guter Wärmetransport zwischen den Gasräumen und dem Hohlraum in der Verbundleiterplatte gewährleistet ist.

In weiterer vorteilhafter Ausgestaltung der Erfindung ist die Niedertemperatur-Brennstoffzelle geeignet für den Betrieb mit reinem Sauerstoff und reinem Wasserstoff. Eine wie oben beschriebene Verbundleiterplatte zeigt eine sehr gute Korrosionsbeständigkeit auch gegen feuchten reinen Sauerstoff und reinen Wasserstoff.

Ein Ausführungsbeispiel der Erfindung wird anhand einer Figur erläutert. Sie zeigt in schematischer Darstellung einen Schnitt durch eine Niedertemperatur-Brennstoffzelle 1, die eine Elektrolyt-Elektroden-Einheit 3 und zwei an die Elektrolyt-Elektroden-Einheit 3 angrenzende Verbundleiterplatten 5 umfasst. Die Elektrolyt-Elektroden-Einheit 3 besteht aus einer Anode 7, einem Elektrolyten 9 und einer Kathode 11. Die Elektrolyt-Elektroden-Einheit 3 und die Verbundleiterplatten 5 sind in Dichtungen 13 gelagert. Die Verbundleiterplatten 5 bestehen jeweils aus zwei Blechen 15, 17, die zwischen sich einen Hohlraum 19 bilden. Benachbart zur Niedertemperatur-Brennstoffzelle 1 ist eine weitere Niedertemperatur-Brennstoffzelle angeordnet, die ebenfalls eine Elektrolyt-Elektroden-Einheit 20 mit zwei Elektroden 21 umfasst.

Die beiden Bleche 15, 17 der Verbundleiterplatten 5 enthalten jeweils 57 Gew.-% Nickel, 16 Gew.-% Molybdän, 15 Gew.-% Chrom, 5 Gew.-% Eisen, 4 Gew.-% Wolfram, 1,5 Gew.-% Kobalt, 0,5 Gew.-% Mangan und 1 Gew.-% sonstige Metalle und Verunreinigungen. Die beiden Bleche 15 und 17 der Verbundleiterplatten 5 sind über ihre gesamte Fläche im wesentlichen 0,15 mm dick und sind mit Prägungen 22 versehen. Innerhalb der außenliegenden Dichtungen 13 der Niedertemperatur-Brennstoffzelle 1 sind die beiden Bleche 15, 17 zusammengeschweißt.

Die Niedertemperatur-Brennstoffzelle 1 ist eine Polymer-Elektrolyt-Membran-Brennstoffzelle (PEM-Brennstoffzelle), die dazu ausgelegt ist, mit reinem Sauerstoff und reinem Wasserstoff als Betriebsgase betrieben zu werden. Während des Betriebs der Niedertemperatur-Brennstoffzelle 1 strömt befeuchteter Wasserstoff in den Anodengasraum 23 der Niedertemperatur-Brennstoffzelle 1, der zwischen der Anode 7 und dem Blech 17 einer der Verbundleiterplatten 5 angeordnet ist. Außerdem strömt mit Wasser befeuchteter Sauerstoff in den Kathodengasraum 25 der Niedertemperatur-Brennstoffzelle 1, der zwischen der Kathode 11 und dem Blech 15 der anderen der beiden Verbundleiterplatten 5 angeordnet ist. Zum Abtransport der Reaktionswärme strömt während des Betriebs der Niedertemperatur-Brennstoffzelle 1 Kühlwasser aus einem Axialkanal 27 in Strömungsrichtung 29 in den Hohlraum 19 der Verbundleiterplatten 5. Die durch die Bleche 15, 17 in den Hohlraum 19 einströmende Reaktionswärme wird vom Kühlwasser aufgenommen, das im weiteren Verlauf in Strömungsrichtung 19 in einen weiteren Axialkanal 31 strömt und von dort aus der Brennstoffzelle abgeführt wird. Die Bleche 15, 17 der Verbundleiterplatte 5 sind sehr korrosionsbeständig gegen befeuchteten Wasserstoff und befeuchteten Sauerstoff auch bei einer Temperatur von bis zu 200 °C. Außerdem sind sie ohne Schaden zu nehmen deformierbar und elastisch genug, um einem Druckunterschied von bis zu 10 bar zwischen den Betriebsgasräumen 23, 25 und den Hohlräumen 19 zu widerstehen.

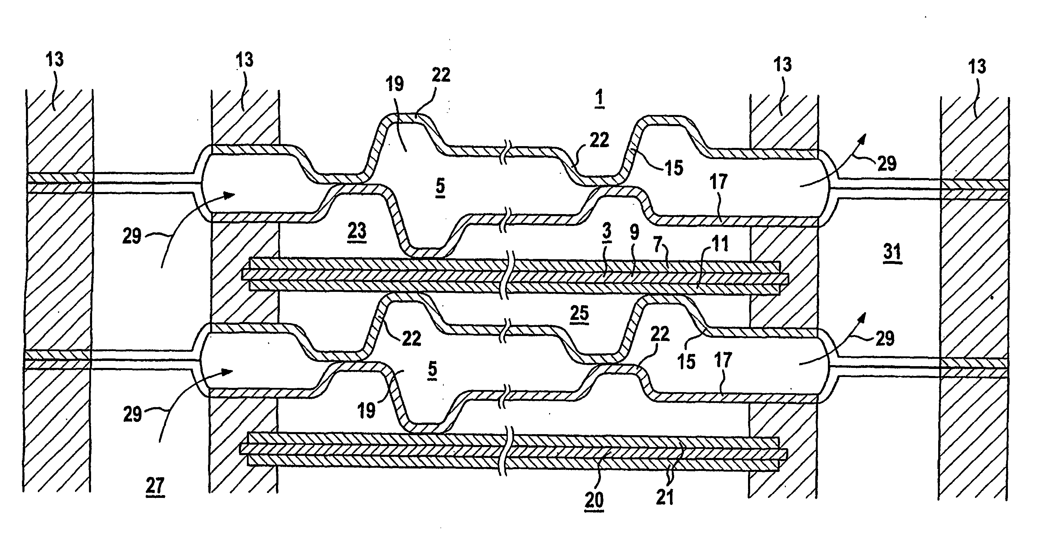

## Patentansprüche

1. Niedertemperatur-Brennstoffzelle (1) mit einer Elektrode (7, 11) und einer Verbundleiterplatte (5), die die Elektrode (7, 11) mit einer Elektrode (21) einer benachbarten Niedertemperatur-Brennstoffzelle elektrisch verbindet, **dadurch gekennzeichnet, dass** die Verbundleiterplatte (5) 50 bis 65 Gew.-% Ni, 12 bis 22 Gew.-% Cr, 10 bis 18 Gew.-% Mo, 4 bis 10 Gew.-% Fe und 0,5 bis 5 Gew-% W enthält.

2. Niedertemperatur-Brennstoffzelle (1) nach Anspruch 1, **dadurch gekennzeichnet, dass** die Verbundleiterplatte (5) zwei einen Hohlraum (19) bildenden Blechen (15, 17) umfasst.

3. Niedertemperatur-Brennstoffzelle (1) nach Anspruch 2, **dadurch gekennzeichnet, dass** die Bleche (15, 17) im Bereich des Hohlraums (19) eine Dicke zwischen 0,08 mm und 0,3 mm aufweisen.

4. Niedertemperatur-Brennstoffzelle (1) nach einem der vorhergehenden Ansprüche, geeignet für den Betrieb mit reinem Sauerstoff und reinem Wasserstoff.

## Claims

1. Low-temperature fuel cell (1) having an electrode (7, 11) and an interconnector plate (5), which electrically connects the electrode (7, 11) to an electrode (21) of an adjacent low-temperature fuel cell, **characterized in that** the interconnector plate (5) contains 50 to 65% by weight of Ni, 12 to 22% by weight of Cr, 10 to 18% by weight of Mo, 4 to 10% by weight of Fe and 0.5 to 5% by weight of W.

2. Low-temperature fuel cell (1) according to Claim 1, **characterized in that** the interconnector plate (5) comprises two metal sheets (15, 17), which form a cavity (19).

3. Low-temperature fuel cell (1) according to Claim 2, **characterized in that** the metal sheets (15, 17) have a thickness of between 0.08 mm and 0.3 mm in the region of the cavity (19).

4. Low-temperature fuel cell (1) according to one of the preceding claims, suitable for operation with pure oxygen and pure hydrogen.

## Revendications

1. Pile (1) à combustible à basse température comprenant une électrode (7, 11) et une plaque (5) conductrice composite qui relie électriquement l'électrode (7, 11) à une électrode (21) d'une pile à combustible à basse température voisine, **caractérisée en ce que** la plaque (5) conductrice composite contient de 50 à 65 % en poids de Ni, de 12 à 22 % en poids de Cr, de 10 à 18 % en poids de Mo, de 4 à 10 % en poids de Fe et de 0,5 à 5 % en poids de W.

2. Pile (1) à combustible à basse température suivant la revendication 1, **caractérisée en ce que** la plaque (5) conductrice composite comporte deux tôles (15, 17) formant une cavité (19).

3. Pile (1) à combustible à basse température suivant la revendication 2, **caractérisée en ce que** les tôles (15, 17) ont dans la zone de la cavité (19) une épaisseur comprise entre 0,08 mm et 0,3 mm.

4. Pile (1) à combustible à basse température suivant l'une des revendications précédentes, appropriée pour le fonctionnement avec de l'oxygène pur et de l'hydrogène pur.
